# EUROPEAN PATENT SPECIFICATION

(11) **EP 0 424 886 B1**
(45) Date of publication and mention of the grant of the patent: **14.12.1994**
(21) Application number: 90120336.4
(22) Date of filing: 23.10.1990
(51) Int. Cl.: C12F 5/00

(54) **Marking and denaturing agent for water-soluble organic solvents**
Markierungs- und Denaturierungsmittel für wasserlösliche organische Lösungsmittel
Agent de marquage et de dénaturation pour des solvants solubles dans l'eau

(30) Priority: 24.10.1989 IT 2210689
(43) Date of publication of application: 02.05.1991
(73) Proprietor: ACNA CHIMICA ORGANICA S.P.A., I-17010 Cengio (Savona) (IT)
(72) Inventor: Papa, Sisto Sergio, Dr., I-20159 Milano (IT)
(74) Representative: Barz, Peter, Dr.

(56) References cited:
- DE-C- 513 410
- MERCK INDEX, 9th edition, 1976; p. 1207#

## Description

The present invention relates to a marking and/or denaturing agent for water-soluble organic solvents, it relates furthermore to the relevant application method and to the organic solvents thus marked and/or denatured.

Particularly, the present invention relates to a permanent marking and/or denaturing of water-soluble industrial organic solvents, so as to make them easily and rapidly identifiable, without any analytical uncertainty, even when they are present in high dilution.

The marking and/or denaturing agent of the present invention finds a particular application in the marking and/or denaturing of lower alcohols or spirits in compliance with the requirements of an easy and certain identification of the marking and/or denaturing compound in view of the final use and fiscal treatment of the organic solvent (spirits) thus marked and/or denatured.

For the sake of brevity, in the present description, reference will be made hereinafter to the denaturation of the industrial organic solvents, by meaning, however, that this term encludes also the contemporaneous marking action by the described agent.

As is known, the denaturation of a product, in its more general meaning, is an operation which is carried out in order to achieve suitable warranties that the relevant denatured product be really made suitable and used for the particular foreseen, well specified and determined purposes.

The denaturation is generally coupled to tariff, tax and fiscal reductions which justify this operation and, in the same time, it is carried out to prevent that products, which have not the qualifications, can benefit from these economic and fiscal reductions, by preventing the possibility of fiscal frauds from taking place.

It is obvious that the main problem for this operation is to provide the chemical compound which offers the maximum guaranty as far as the required characteristics are concerned. The main characteristics required from the a denaturing substance are:
-- it should be compatible with the physical state of the product to be denatured and, therefore, can be easily homogenized with this latter;
-- it should be difficult to eliminate by the various industrial methods, which are, of course, economically convenient;
-- it should be easily identifiable as such or by simple chromatic chemical reactions or instrumental dosages;
-- should be added in small amounts such, however, to allow its identification;
-- the denaturation shouldn't economically and appreciably fall on the price of the tax reduced product and, therefore, its cost should be low;
-- it shouldn't be incompatible with the end uses to which the product is assigned;
-- shouldn't give rise pollution problems;
-- it should be stable during the use at the normal conditions of storage of the denatured product and shouldn't give rise toxicity problems.

The simultaneous check of all the above requirements is such that the finding of very suitable products is extremely difficult.

Denaturing compounds used in the field of the spirits are known and, particularly, for the main representative, namely ethyl alcohol which is denatured when utilized for purpose lighting, heating, motive power, detergency and for the production of inks and paints and so like, all utilizations having a separate fiscal treatment.

Particularly, it is known the use of methyl alchol, which, even if it is effective from the technical point of view, it is highly toxic for the man and it is not easily detectable by simple tests.

It has also been proposed the use of methylethyl ketone which is also effective from the complesive point of view; however, it can be naturally found, for example in the alcohols deriving from fermentation processes and, furthermore, it is not easily detectable unless complex analytical procedures are used.

DE-C-513 410 discloses a method of denaturing alcohols by means of a complex mixture of S-containing condensation products. The suitability of said mixture for the denaturing of alcohols is exclusively attributed to their most pronounced characteristic, i.e. their penetrating and repulsive odour.

Lastly it is known the use of quaternary ammonium salts which are effective as far as the organolectic aspect is concerned, but they are easily separated by distillation and, therefore, do give poor guarantee with reference to possible frauds.

It has now been found, and it is subject matter of the present invention, that it is possible to permanently mark and/or denature water-soluble organic solvents, such as, for example, spirits and particularly ethyl alcohol, avoiding the drawbacks, which the known substances have, by adding small amounts of thiophene.

The subject matter of the present invention is, therefore, a denaturing and/or marking agent for water-soluble organic solvents constituted by thiophene.

Other objects are those of providing the relating denaturing and/or marking process consisting in adding small amounts of thiophene to the water-soluble organic solvents and the water-soluble organic solvents thus denatured.

The water soluble organic solvents suitable for being denatured by thiophene, according to the present invention, consist of compounds having a number of carbon atoms comprised between 1 and 5; particularly monohydroxy alcohols. Preferably, thiophene is suitable for denaturing ethyl alcohol.

The amounts of thiophene can vary within wide limits, the minimum amount to be used being only dependent on the sensitivity of the detection text which is used.

By using amount equal to 2% by weight, it is possible to detect frauds until a dilution of 100 times by use of a simple and quick detection method which will be described hereinafter.

Amounts of thiophene comprised between 0.01 and 10% parts by weight, preferably comprised between 0.1 and approximately 2% parts by weight, are sufficient.

Generally, it is advisable to use some excess of denaturing agent with respect to the minimum amount required for the detection, so that it is possible to identify the denaturing and/or marking agent even in the case of successive dilutions up to 100 times, in case of fraud.

By use of thiophene, as denaturing agent, many advantages are obtained. These advantages can be thus summarized: it is a liquid stable substance, which does not affect the properties of the water-soluble organic solvent and it can be removed with difficulty from the water-soluble organic solvents, for instance by treatments with acids, alkalis, by absorption with charcoal or with decolourizing earths, by distillation and so on.

Thiophene, moreover, is colourless and its presence can be detected by a specific, simple and highly sensitive chromatic test. Lastly, it has a reduced cost and is readily commercially available on the market and its presence cannot be come back to the process type for producing the alcohol (for instance to the fermentation synthesis).

The simplest identification method does not require complicated apparatus and can be quickly performed also by a non-specialized worker.

It consists of a quick and sensitive chromatic reaction obtained by the water-soluble solvent (ethyl alcohol) denatured with thiophene to a mixture constituted by a solution of Isatin in chloroform and an aqueuos-acid solution of ferric sulphate. After few minutes (approximately 5) a sweet violet colouration appears in the lower aqueous-acid layer.

The spectrophotometric measurement of the colour intensity allows also a quantitative determination, as an alternative to the Gaschromatografic dosage of high semplicity.

The following examples illustrate the invention.

### EXAMPLE 1

2 g of thiophene were added to 100 ml of ethyl alcohol at 90% (Sol. A).

A concentration of thiophene equal to 2% (weight/vol.) was obtained without imparting any particular coloration to the ethyl alcohol to which it has been added.

15 ml of a solution containing 0.1 g of Ferric sulphate dissolved into 50 ml of water and added with 420 ml of sulphuric acid, having a density of 1.84 were introduced into a test tube and 2 ml of isatin solution in 100 ml of chloroform was added to.

The mixture was gently stirred for emulsifying 1 ml of ethyl alcohol to be tested (Sol. A) was added. It was gently stirred for 2 minutes, allowed to stand for 5 minutes so as to obtain a complete stratification.

Two layers were obtained: the lowermost (aqueous-acid) showed an intense violet colouration.

By operating as above described, but by using ethyl alcohol at 90% non-added with thiophene, the violet colouration didn't appear.

### EXAMPLE 2

1 ml of denatured ethyl alcohol of example 1 containing 2% (weight/vol.) of thiophene were added to 99 ml of not-denatured ethyl alcohol at 90%.

100 ml of ethyl alcohol containing 0.02% of thiophene were obtained.

1 ml of this solution was treated as in Example 1.

After 5 minutes, a characteristic violet colouration appeared having an intensity proportionally lower than that described in Example 1.

## Claims

1. A method of denaturing and/or marking a water-soluble organic solvent having from 1 to 5 carbon atoms, characterized in that an amount of from 0.01 and 10% by weight of thiophene is added to said solvent.

2. The method of claim 1 wherein the water-soluble organic solvent is ethanol.

3. The method of claim 1 or 2, wherein the thiophene is used in an amount of from 0.1 to 2% by weight.

4. Water-soluble organic solvents, particularly monohydroxyl alcohols, denaturated and/or marked by thiophene according to the preceding claims.

5. Ethanol denatured and/or marked by thiophene according to claim 2.

## Patentansprüche

1. Verfahren zum Denaturieren und/oder Markieren eines wasserlöslichen organischen Lösungsmittels mit 1 bis 5 Kohlenstoffatomen, dadurch gekennzeichnet, daß eine Menge von 0,01 bis 10 Gew.-% Thiophen zu dem Lösungsmittel gegeben wird.

2. Verfahren nach Anspruch 1, worin das wasserlösliche organische Lösungsmittel Ethanol ist.

3. Verfahren nach Anspruch 1 oder 2, worin das Thiophen in einer Menge von 0,1 bis 2 Gew.-% eingesetzt wird.

4. Wasserlösliche organische Lösungsmittel, insbesondere Monohydroxyalkohole, die gemäß den vorhergehenden Ansprüchen durch Thiophen denaturiert und/oder markiert sind.

5. Ethanol, der gemäß Anspruch 2 durch Thiophen denaturiert und/oder markiert ist.

## Revendications

1. Un procédé de dénaturation et/ou de marquage d'un solvant organique soluble dans l'eau renfermant de 1 à 5 atomes de carbone, caractérisé en ce que l'on ajoute une quantité de 0,01 à 10% en poids de thiophène à ce solvant.

2. Le procédé selon la revendication 1, dans lequel le solvant organique soluble dans l'eau est l'éthanol.

3. Le procédé selon la revendication 1 ou 2, dans lequel le thiophène est utilisé en une quantité de 0,1 à 2% en poids.

4. Solvants organiques solubles dans l'eau, en particulier alcools monovalents, dénaturés et/ou marqués par le thiophène selon les revendications précédentes.

5. Ethanol dénaturé et/ou marqué par le thiophène selon la revendication 2.
